# EUROPEAN PATENT APPLICATION

(11) **EP 3 733 625 A1**
(43) Date of publication of application: **04.11.2020**
(21) Application number: 20172799.7
(22) Date of filing: 04.05.2020
(51) Int. Cl.: C04B 18/02, C04B 20/10, C04B 40/00

(54) **MANUFACTURED AGGREGATE**

(30) Priority: 03.05.2019 GB 201906236
(71) Applicant: Gallagher Aggregates Limited, London, Greater London WC1X 8UE (GB)
(72) Inventor: HUNT, Gary, Groes-faen, Mid Glamorgan CF72 8NG (GB)
(74) Representative: Graham Watt & Co LLP

(57) **Abstract**

The invention provides methods for producing suitable natural aggregate replacements which can be used in the production of concrete, for example. A method for manufacturing hydraulically bound aggregate according to the invention comprises (i) mixing hydraulic fines material with air pollution control residues and sodium silicate to form a first mixture; (ii) adding a sulphate containing material to the first mixture to form a second mixture, wherein the second mixture comprises compounds which encapsulate heavy metals in the air pollution control residues; and iii) transferring the second mixture to a granulation process, thereby forming hydraulic bound aggregate particles.

## Description

The present invention relates generally to manufactured light weight aggregate and more particularly to methods of producing manufactured aggregate from natural or manufactured materials having a density of less than 1200kg/M³ according to BSEN13055.

Concrete is one of the most used commodities in the developing world and is comprised of aggregates, cement, admixtures and water. Sometimes known as "construction aggregate", aggregate is the name given to a broad category of coarse to medium grained particulate material that is widely used in the construction industry and is a fundamental constituent of concrete.

In order to meet the demands of the construction industry, millions of tonnes of aggregates are quarry mined or dredged each year for the production of concrete. There is a growing environmental demand to replace the natural aggregates with recycled, manufactured or alternative materials in order to reduce the effect environmental effects thereof, e.g. global warming and the emissions associated with the industry, as cement production is the main contributor to global warming within the construction industry.

Replacements for cement and aggregates are widely known, with by-products from the steel and power industry being the most common. For example, blast furnace slag from the steel industry and fuel bottom ash and pulverised fuel ash from the coal fired power industry. However, due to legislation changes and environmental pressure to reduce greenhouse gas emissions, the coal fired power stations are reducing or closing. Coal fired power stations are often being replaced with alternative renewable energy stations, such as solar plants, wind plants and waste-to-energy plants. These changes leave a major shortage in natural aggregate replacements.

Waste-to-energy plants is the name given to waste management facilities that produce electricity via the combustion of waste. Waste-to-energy plants may also be known as trash-to-energy, municipal waste incineration, energy recovery or resource recovery plant.

The term waste-to-energy plant is used herein.

Waste-to-energy plants typically deal with municipal waste and currently millions of tonnes of household waste are diverted from landfill and sent to waste-to-energy plants. These waste-to-energy plants use a range of technologies to produce electricity as an alternative to coal fired power stations. This therefore reduces the need for landfill by millions of tonnes. However, as a result the technologies produce waste in smaller quantities, such as incinerator bottom ash (IBA) which is re-processed to form incinerator bottom ash aggregate (IBAA), which is already in use by the construction industry.

In addition, these technologies also produce waste in the form of air pollution control residues, which are released into the atmosphere.

Waste air pollution control residues, sometimes referred to as APCr, are hazardous due to the soluble heavy metals, sulphates and chlorides that they contain. For this reason it is common practice within the waste industry to subject air pollution control residues to a washing process. The washing process removes the soluble heavy metals, sulphates and chlorides and also converts the lime (calcium oxide) to calcium hydroxide.

While many waste-to-energy plants typically deal with municipal waste (i.e. household waste), some waste-to-energy plants are bespoke and only use specific waste types commonly from specific recycling processes, such as the paper industry. The paper industry is one of the leading industries for 100% recycling, where they recover the paper fibres and reuse them in paper and cardboard production. However, after being recycled several times the paper fibres in sludge form become too small and then are used as feedstock fuel to produce electricity. Like other waste-to-energy plants, they produce incinerator bottom ash and air pollution control residues, often referred to as waste paper sludge ash or paper sludge ash.

In addition, modern cement plants use waste derived fuels or alternative raw materials that produce cement kiln dust (CKD) and by-pass dust (BPD), which are similar in composition to air pollution control residues.

A further problem is the perception that dioxins, furans and polychlorobiphenyls (PCBs) found in air pollution control residues, if used in construction and concrete production, may cause harm if disturbed in the future.

The waste industry has an obligation to use the Best Available Technique or Technology (BAT), of which waste-to-energy plants have several options. The nature of air pollution control residues may vary depending on the burning technology from which they are derived. It is therefore important to understand the nature of these independent air pollution control residues supplies at the start of any manufacturing process using the waste materials.

The quarrying industry also produces millions of tonnes of aggregate for the construction industry. However, as a result of their crushing activities this produces a high percentage of fines that have little or no commercial value, in particular due to the particle size that is produced, predominantly below 63 µm. It is often the case that due to the moisture content of these fine materials it is not possible to recover a high percentage of natural aggregate, moisture blocks the screening process and so the natural aggregate cannot be recovered.

The present invention seeks to provide means for producing natural aggregate replacements from waste such as air pollution control residues from waste-to-energy plants and waste fines from the quarrying industry.

It is a goal to convert the various "waste" material to an "end-of-waste" material as efficiently as possible. End-of-waste materials are subject to far fewer regulations as they are known to be non-hazardous and so can be handled and used in a much simpler and less-costly manner than materials considered to be waste materials.

According to a first embodiment of the present invention, there is provided a method of manufacturing hydraulically bound aggregate. The method comprises:
i) mixing hydraulic fines material with air pollution control residues and a sodium silicate solution to thereby form a first mixture;
ii) adding a sulphate containing material to the first mixture to form a second mixture, wherein the second mixture comprises compounds which encapsulate heavy metals in the air pollution control residues; and
iii) transferring the second mixture to a granulation process, thereby forming hydraulic bound aggregate particles.

In this way the present invention provides a method for producing suitable natural aggregate replacements. In particular, the methods of the present invention combine waste streams, such as from the quarrying industry and waste-to-energy plants, with sodium silicate to produce a hydraulically bound aggregate. The hydraulic bound aggregate can then be used in numerous ways, such as in the production of concrete, for example. In some instances, the granulation process may include first mixing and then granulating the second mixture to thereby form hydraulic bound aggregate particles. The step of mixing the waste fines material with air pollution control residues and a sodium silicate solution initiates several chemical reactions. For example, introduction of sodium silicate solution causes calcium oxide, calcium aluminate and calcium hydroxide (from the fines material) to react with magnesium (also from the fines material) and silica to form cementious compounds. The cementious compounds include calcium alumina silicates, calcium silicates and calcium magnesium silicates.

Also during the mixing step potassium and sodium chlorides will react to form more sodium chloride. As will be appreciated by the skilled person, the exact reactions and degree of reactivity taking place in the mixture will vary depending on the make-up of the particular fines material, which will vary from batch to batch. Waste material from a particular source is likely to generally contain certain materials with the precise quantities varying. The process and additives will be adjusted for the general composition of the fines material which is used.

The step of adding a sulphate containing material to the first mixture to form a second mixture leads to increased amounts of calcium sulphate. The calcium sulphate reacts to form an increased amount of compounds capable of encapsulating heavy metals. For example, calcium sulphate reacts with hemi carbonate and hydro carbonate to form additional ettringite. This extra production of ettringite ensures that the heavy metals from the air pollution control residues are encapsulated and subsequently stabilised within the crystal structure of ettringite. In this way, the present invention prevents reduces the release of components which are considered to be hazardous from being released into the environment.

Thus, the invention causes the generation of additional amounts of compounds capable of encapsulating heavy metals from the hydraulically bound aggregate to land and groundwater. (See table 3, which is a table showing the leachate of water soluble metals from hydraulically bound aggregate produced according to methods of the present invention.)

The step of transferring the second mixture to a granulation process is to form large hydraulic bound aggregate particles by interlocking and hardening the particles of the second mixture.

As described above, it is currently common practice within the waste industry to subject air pollution control residues to a washing process in order to remove soluble heavy metals, sulphates and chlorides and also converts the lime (calcium oxide) to calcium hydroxide. However, the lime and calcium chloride which are removed by this washing process, are in fact beneficial to the exothermic reactions that are used in the present invention. The present invention therefore provides a novel and advantageous method for producing aggregate.

The method of manufacturing hydraulically bound aggregate according to the present invention can be performed when the fines material is relatively dry. Fines material having 12% to 16% residual moisture content is considered dry. Thus, if the waste material has less than 12% residual moisture content then a drying process is not required as an initial step. If the waste material has more than 12% residual moisture content then the material should be dried before the method of manufacturing hydraulically bound aggregate begins, which can increase the cost of the process. If the fines material is too dry (less than about 12% residual moisture) the final product may be overly powdery. If the fines material is too wet (more than about 16% residual moisture) the material grows too quickly and forms over-sized but a physically weak final product. Working in the range of 12% to 16% residual moisture produces a robust final product of appropriate size and strength. The preferred residual moisture content is 12.5%.

Suitably, the compounds which encapsulate heavy metals in the air pollution control residues comprise ettringite, hemi carbonate and/or hydro carbonate. Compounds which encapsulate these heavy metals do so by substantially holding the metals within the crystal structure of the compound, thereby locking them in and preventing their escape/leaching into the environment.

Ettringite is a hydrous calcium aluminium sulphate mineral having formula Ca₆Al₂(SO₄)₃(OH)₁₂·26H₂O. It is a colourless to yellow mineral crystallizing in the trigonal system. The properties of ettringite mean that it is capable of encapsulating heavy metals found in the air pollution control residues. In the methods of the present invention, ettringite is formed through the chemical reaction between calcium sulphate (present in the sulphate containing material) and calcium aluminate (present in the air pollution control residue, the hydraulic fines material and the sulphate containing material). As previously mentioned, the formation of ettringite is an important product of this reaction, and in the process of forming the hydraulically bound aggregate, due to the encapsulation of heavy metals present in the air pollution control residues. Hemi carbonate and hydro carbonate are also formed and also encapsulate the soluble heavy metals found in the air pollution control residues.

It is also possible that ettringite is formed in smaller amounts (compared to the step of adding the sulphate containing material) during the mixing step, where calcium aluminate particles may react with sulphur present in the air pollution control residues to form ettringite.

Preferably, the compounds which encapsulate heavy metals substantially reduce leaching of the heavy metals from the aggregate.

Suitably, the air pollution control residues are paper sludge ash (PSA), cement kiln dust (CKD) and/or by-pass dust (BPD). These products are waste materials but can be used in the present invention to form valuable end-of-waste materials. Spent fluid catalytic cracking catalyst may be used to supplement PSA when there is low availability of PSA. Examples of suitable PSA amounts include 10% PSA (% by weight).

In this way, paper sludge ash provides a suitable example of an air pollution control residue which comprises calcium oxide, calcium hydroxide, calcium chloride, magnesium oxide and/or calcium aluminates. Paper sludge ash is a particularly suitable component as it is a fibrous waste product of recycled paper. Where any of these air pollution control residues are mentioned in the description, it will be appreciated that any of these examples could also be used.

It is preferable to know which type of air pollution control residue is being used in the methods of the invention, as the make-up of the constituents will vary dependant on the nature of the burn material. For example, paper sludge ash is a by-product of the paper recycling process, whereas cement kiln dust and by-pass dust are produced by modern cement plants. Thus, the constituents of the air pollution control residues will vary between paper sludge ash and cement kiln dust, for example.

Conveniently, the first mixture comprises cementitious compounds. Preferably, the cementitious compounds comprise calcium alumina silicates, calcium silicates and calcium magnesium silicates. The cementitious compounds help in binding the constituents of the hydraulically bound aggregate together.

Preferably, the sulphate containing material is Portland cement, however it will be appreciated that any suitable sulphate containing material could be used. Portland cement is a widely used material and is therefore easy to obtain. During the hydration process, the sulphate containing material reacts with the components of the first mixture to release calcium sulphate which further reacts with the encapsulating compounds such as hemi carbonate and hydro carbonate to form additional ettringite. As described, ettringite ensures that heavy metals present in the air pollution control residues are encapsulated.

Suitably, the sulphate containing material is a hardening agent. In this way, the sulphate containing material provides the aggregate with improved early strength making it more suitable for downstream handling and curing purposes.

Conveniently, the sodium silicate solution has a viscosity of between about 20 cP and 1200 cP at 20°C. Preferably, the sodium silicate solution has a viscosity between about 100 cP to 200 cP at 20°C. These viscosities of sodium silicate have been shown to be the most effective in producing the hydraulically bound aggregate. It will be appreciated, that any suitable viscosity of sodium silicate solution which gives rise to the desired hydraulically bound aggregate may be used.

Suitably, the sodium silicate solution has a silicate to sodium ratio of about 2:0 and 3:0.85. Preferably, the sodium silicate solution has a silicate to sodium ratio of about 2:0 and 3:2.

Conveniently, the method further comprising the step of: combining the sodium silicate solution with water prior to the mixing step. Preferably, the water acts as a carrier for the sodium silicate. In this way, the sodium silicate solution is cohesive and as such will not dissolve upon the combination with water. Accordingly, the water acts as a carrier of the sodium silicate. Preferably, the step of combining the sodium silicate solution with water occurs immediately before the step of mixing the hydraulic fines material with air pollution control residues and the sodium silicate to thereby form a first mixture. In this way, this reduces the dilution of the sodium silicate which would otherwise diminish its reactivity.

Suitably, the sodium silicate viscosity and/or ratio of constituents is dependent on lime and chloride constituents. In this way, the sodium silicate used in the methods of producing the hydraulically bound aggregate may be varied depending on the composition of the constituents used, for example whether paper sludge ash is used or cement kiln dust.

Sodium silicate comes in various different formulations. These different formulations vary in their reactivity. Preferably, the sodium silicate used in the present invention is predominantly used to form dicalcium silicate (C₂S) or tricalcium silicate (C₃S). In the methods of the present invention, tricalcium is reactive for up to around 24 hours, while dicalcium silicate is reactive for around 2 to 7 days. Furthermore, dicalcium silicate comes in different forms such as α and β, which also vary in their reactivity. Dicalcium silicate α is reactive relatively early in the method, thereby providing the aggregates of the present invention with relatively early strength (early strength largely develops in 2 to7 days and lasts up to 28 days). Dicalcium silicate β is reactive for longer than dicalcium silicate α. Preferably, the dicalcium silicate β form is predominantly used in the present invention. It is beneficial to the methods of the invention to use a sodium silicate having a greater duration of reactivity, as this reduces the amount of sulphate containing material (such as Portland cement) that is required for the hardening of the hydraulically bound aggregate. Thus, dicalcium silicate is preferable for the present invention.

Conveniently, the granulation process produces hydraulically bound aggregate particles having a particle size distribution of less than about 1 mm up to about 6 mm in size. The size of the particles produced by the methods may vary depending on the starting materials used. Generally, the finer the starting materials (e.g. the hydraulic fines material) the better the granulation process. Accordingly, quarry fines provide a good example of fines material which are ideally suited for the granulation process. The air pollution control residues are also a very fine material, making it ideal for this process.

Conveniently, during the mixing and granulation steps dioxins, furans and PCB's in the air pollution control residues bond with clay platelets from the waste fines, fibres from the air pollution control residues and/or the hydraulic binder to encapsulate the dioxins, furans and PCBs.

Suitably, the method further comprises adding water to the first mixture and/or to the second mixture. In this way, water may be added to the mixing step to ensure that the chemical reactions that are required can take place. The water can also assist in the growing of aggregate particles to increase their size.

Suitably, after transferring the second mixture to a granulation process, the method further comprises the step of: transferring the second mixture to a pelletiser. In this way, the method can produce larger particles of hydraulic bound aggregate than can be produced from the granulating process alone. Therefore, when larger particles of hydraulically bound aggregate are required, it is preferred to transfer the mixture from the granulator to a pelletiser.

Preferably, the hydraulic bound aggregate particles have a size distribution of around 4mm to 14 mm in size, after they have passed through the pelletiser. Most preferably, the hydraulic bound aggregate particles have a size distribution of around 4 mm to 10 mm. Larger particles can also be produced in this way, but these would likely become weaker in strength.

Conveniently, the method further comprises the step of: curing the hydraulic bound aggregate. In this way, once hydraulic bound aggregate having the desired particle size has been achieved, the aggregate is transferred to a storage area for curing.

Preferably, the step of curing the hydraulic bound aggregate comprises storing the aggregate for around 2 to 24 hours. This provides enough time for the aggregate to harden and strengthen.

Preferably, a sulphate containing material, such as Portland cement, is added during the curing step. The addition of Portland cement at this stage may be beneficial as it enables the early handling of the aggregate.

Conveniently, the method further comprises the step of: rinsing the hydraulic bound aggregate. In this way, rinsing the hydraulic bound aggregate will remove unwanted compounds from the hydraulic bound aggregate. The rinsing step is preferably carried out once the aggregate has achieved its desired strength.

Suitably, the rinsing step is performed around 12 to 48 hours after the granulation step. Preferably, the rinsing step is performed around 18 to 30 hours after the granulation step. In this way, the benefits of the lime and calcium chloride will be maximised and chloride salts may be left among the hydraulic bound aggregate. Rinsing the aggregate to remove the remaining chloride salts may be beneficial depending on the application of the aggregate. For example, rinsing the aggregate will be beneficial to construction applications containing metals, which have limits of chloride content. The step of rinsing the aggregate will therefore reduce the chloride content, making the aggregate more suitable for use in construction involving metals.

Conveniently, the rinsing step is performed in a wash plant.

Suitably, the unwanted compounds comprise chloride salts and/or dicalcium silicates.

In some instances, the hydraulically bound fines contain dicalcium silicates that are reactive for up to seven days and beyond. During the aggregate manufacturing process, there is insufficient moisture present to fully react the calcium silicates. Therefore, rinsing the aggregate at an early stage will enhance the strength development of the aggregate.

According to a second embodiment of the present invention, there is provided a method of recovering hydraulic fines material from waste fines material. The method comprises:
(i) combining waste fines material with air pollution control residues, thereby initiating an exothermic reaction in the waste fines material;
(ii) reacting the waste fines material and air pollution control residues for around 12 to 24 hours, thereby forming hydraulic fines material and limestone aggregates; and
(iii) separating the hydraulic fines material from the limestone aggregates.

This method for recovering hydraulic fines material from waste fines material can be carried out as a precursor to the methods of producing hydraulic bound aggregate. This method is used prior to the methods of producing hydraulic bound aggregate when the waste fines material is relatively wet. Waste fines material is considered to be wet if it has a residual moisture content of more than 12%. The waste fines (such as quarry fines) often contains moisture and often fine particles of clay type material. When the wet waste fines are mixed with the air pollution control residues an exothermic reaction takes places between calcium oxide (present in the air pollution control residues) and the moisture. Temperatures between the air pollution control residues and moisture may be between 42°C and 80°C. Temperatures in the combined powders and waste fines mix may be between 18°C and 28°C.

Generally, the exothermic reaction will be followed by a relatively slower heat of hydration reaction between the moisture, calcium oxide, hydroxide and aluminates.

These steps reduce the moisture content in the waste fines material. As a result, the waste fines material separates into the clay type particles and rock fines. The material can then be left to react for a suitable period of time.

Treating the waste fines material in this way prepares the material so that it can then be put through a separation process. The separation process enables natural aggregate from the fines material to be recovered, which would otherwise have been disposed of.

A suitable manner of separating the components of the treated material is by size. For example, the components can be separated by size dependant on the value of the aggregate to be recovered. Preferably, the size of the lime aggregate to be recovered would be greater than about 2mm. More preferably the aggregate to be recovered would be greater than 1mm. The finer fraction separated from the lime aggregate can then be used in methods for producing hydraulic bound aggregate. The finer fraction from the separation is a fine material containing a hydraulic binder, which may comprise calcium aluminates and calcium silicates and other compounds such as quartz, magnesium, calcium carbonate, calcium hydroxide, calcium sulphate, sodium chloride, potassium chloride and other minor constituents including soluble heavy metals. It will be appreciated that the constituents of the finer material will depend upon the properties of the starting materials.

Suitably, the hydraulic fines material comprises particles having a size of less than 1mm and the limestone aggregates comprise particles having a size of greater than 1mm.

Finer hydraulic fines material are preferred. For example, finer particles are preferred for the granulation step in the methods for producing hydraulically bound aggregate. Suitably, waste fines material in the form of quarry fines are therefore ideally suited for this process.

Preferably, the separating process is a size exclusion process. In this way, the components of the waste fines material can be easily separated. This enables natural aggregate to be recovered which would have otherwise been disposed.

Conveniently, the step of combining the waste fines material and air pollution control residues is carried out in a rapid continuous mixer. In this way, a rapid continuous mixer is a suitable vessel for carrying out the combining step as it is safe, robust and secure and does not pose as an environmental risk.

Suitably, the air pollution control residues act as a drying agent for the waste fines material. In this way, the air pollution control residues act by reducing the moisture content of the waste fines material.

Suitably, wherein the combining step comprises adding sodium silicate solution. While it is possible to add sodium silicate to the method for recovering hydraulic fines material from waste fines material, in some instances it may reduce the exothermic reaction.

Conveniently, the exothermic reaction causes a temperature between 42°C and 80°C. In this way, the reaction produces enough heat to effectively reduce the moisture content of the waste fines material. This aids in the separation of the fines material from the clay type particles.

Preferably, the method further comprises the step of: storing the hydraulic fines material and limestone aggregates prior to the step of separating. In this way, the mixture of the waste fines material and air pollution control residues are given enough time to react and dry out. This makes the separation of the particles easier.

Suitably, the hydraulic fines material and limestone aggregates are stored for around 6 to 48 hours. Preferably, the hydraulic fines material and limestone aggregates are stored for around 16 to 24 hours.

Conveniently, the method of recovering hydraulic fines material from waste fines material precedes the method of manufacturing hydraulically bound aggregate.

Waste fines material is used to refer to fines material prior to combining with air pollution control residues. A preferred example of waste fines material is quarry fines. The term hydraulic fines material is used to refer to waste fines material that has been combined with air pollution control residues.

The above and other aspects of the present invention will now be described in further detail, by way of example only, with reference to the accompanying Figures, in which:
Figure 1 is an X-ray diffraction (XRD) pattern of PSA 1 as a powder before addition of sodium silicate solution;
Figure 2 is an XRD pattern of PSA 1 activated following addition of sodium silicate solution;
Figure 3 is an XRD pattern of PSA 2 as a powder before addition of sodium silicate solution;
Figure 4 is an XRD pattern of PSA 2 activated following addition of sodium silicate solution;
Figure 5 is an XRD pattern of PSA and APCr 1 as a powder before addition of sodium silicate solution;
Figure 6 is an XRD pattern of PSA and APCr 1 activated following addition of sodium silicate solution;
Figure 7 is an XRD pattern of APCr 1 as a powder before addition of sodium silicate solution;
Figure 8 is an XRD pattern of APCr 1 activated following addition of sodium silicate solution;
Figure 9 is an XRD pattern of APCr 2 powder before addition of sodium silicate solution;
Figure 10 is an XRD pattern of APCr 2 activated following addition of sodium silicate solution;
Figure 11 is an XRD pattern of combined materials including powdered Portland cement as hydraulic road binder;
Figure 12 is an XRD pattern of combined materials including Portland cement as activated hydraulic road binder;
Figure 13 is an XRD pattern of Portland cement powder;
Figure 14 is an XRD pattern of hydrated Portland cement;
Figure 15 is an XRD pattern of hydraulically bound aggregate HBA/F1;
Figure 16 is an XRD pattern of hydraulically bound aggregate HBA/F3;
Figure 17 is an XRD pattern of hydraulically bound aggregate HBA/F4;
Figure 18 is an XRD pattern of hydraulically bound aggregate HBA/F5
Figure 19 is an XRD pattern of hydraulically bound aggregate HBA/F6; and
Figure 20 is an XRD pattern of hydraulically bound aggregate HBA/F8.

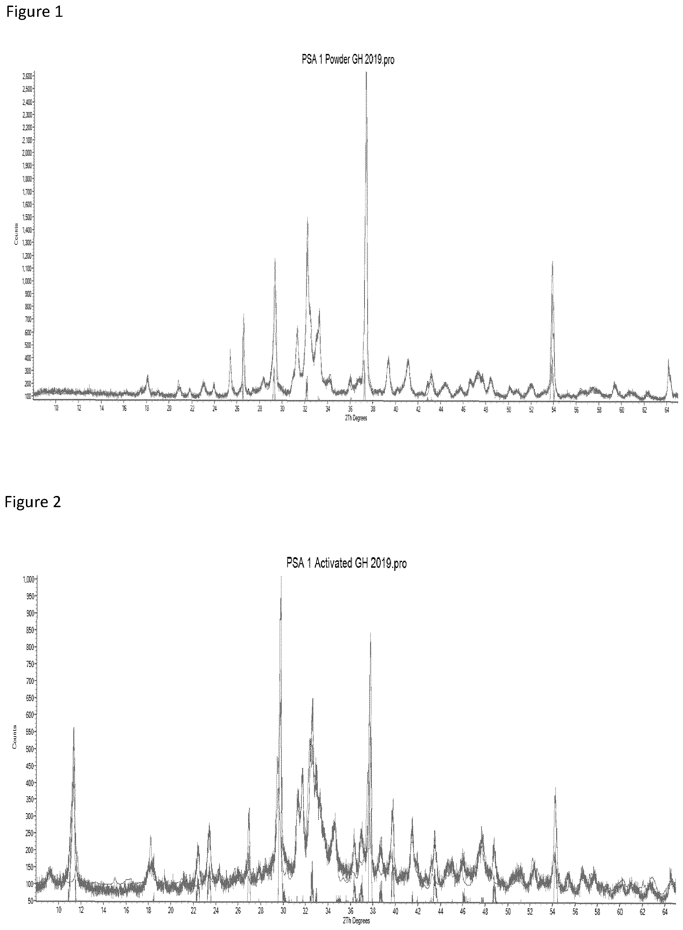

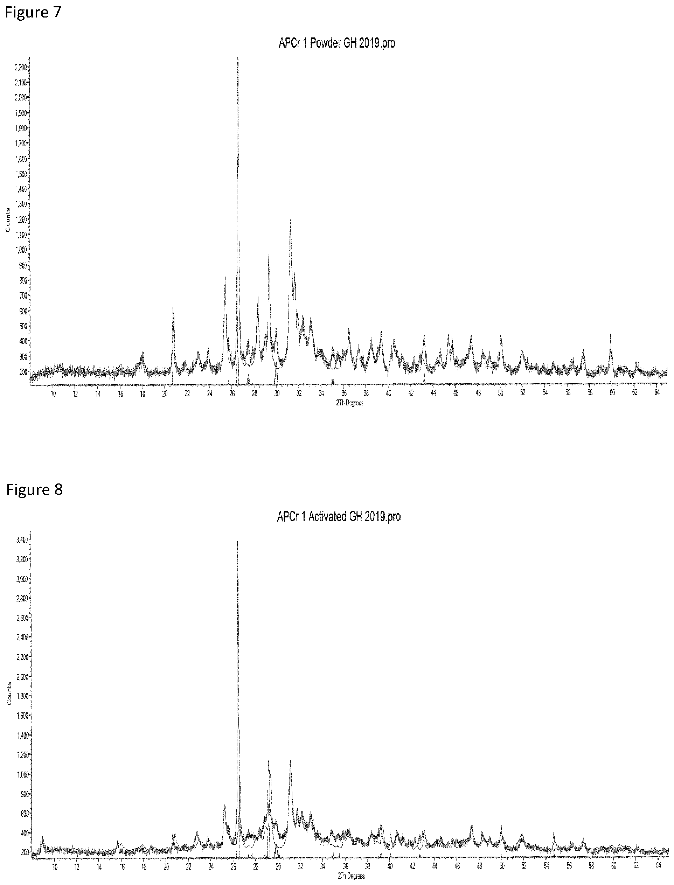

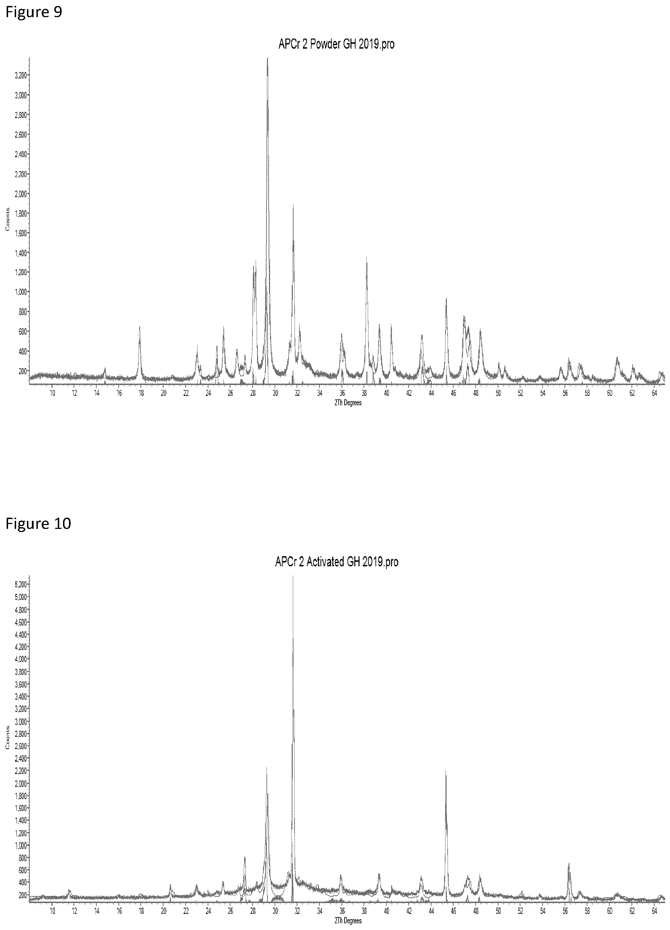

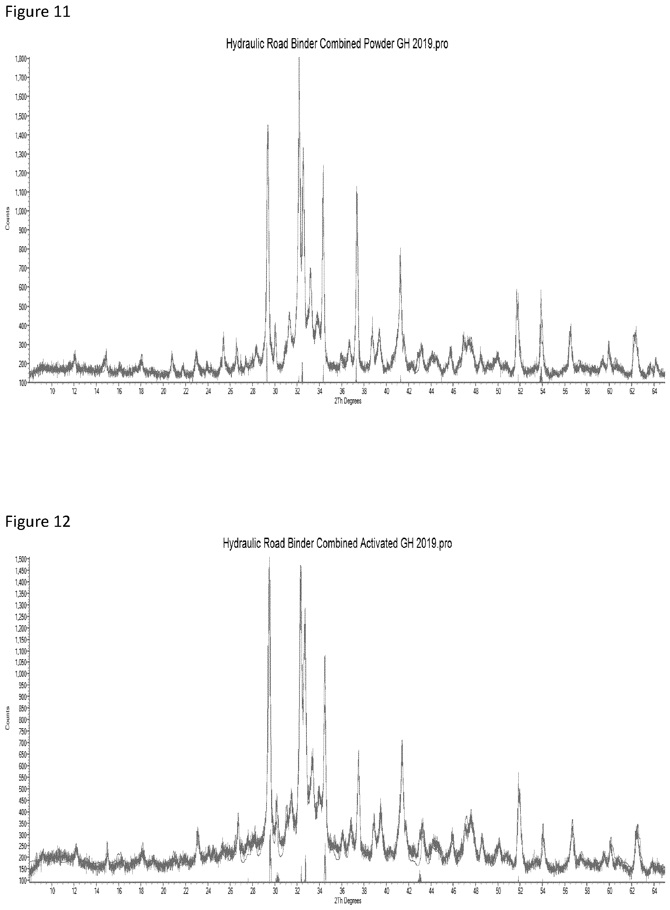

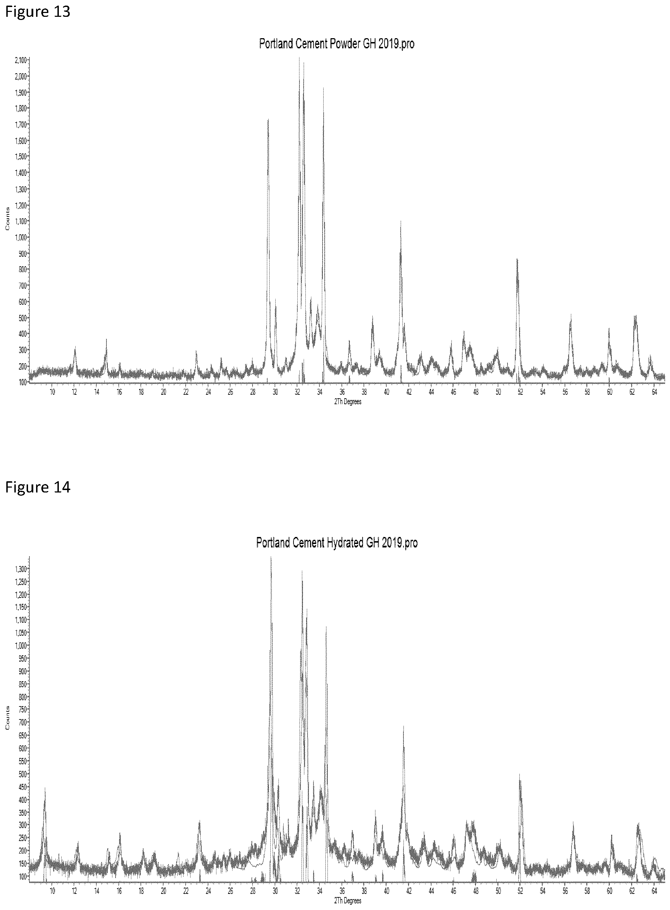

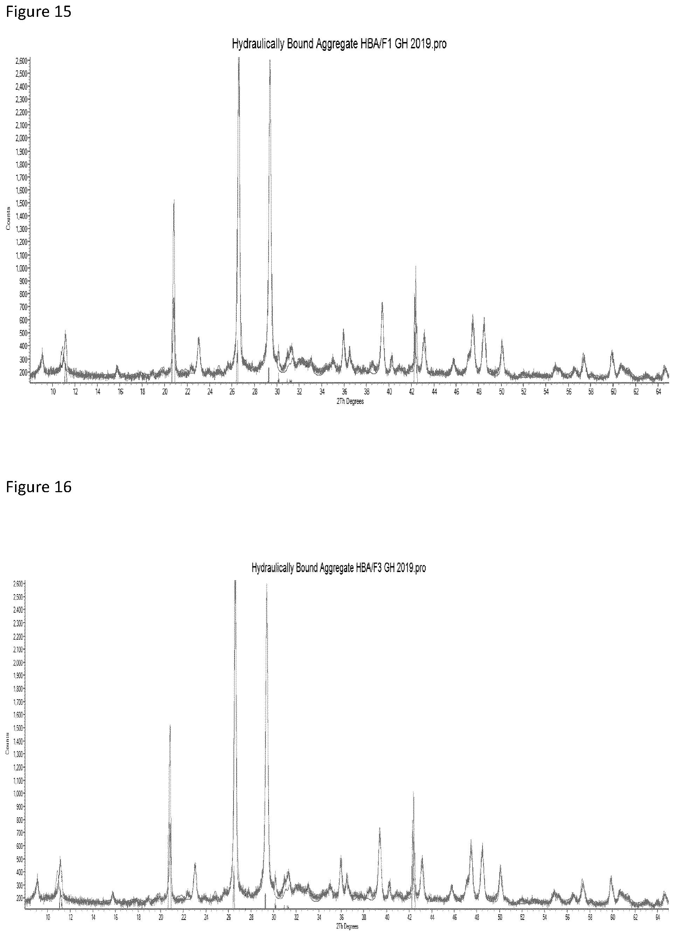

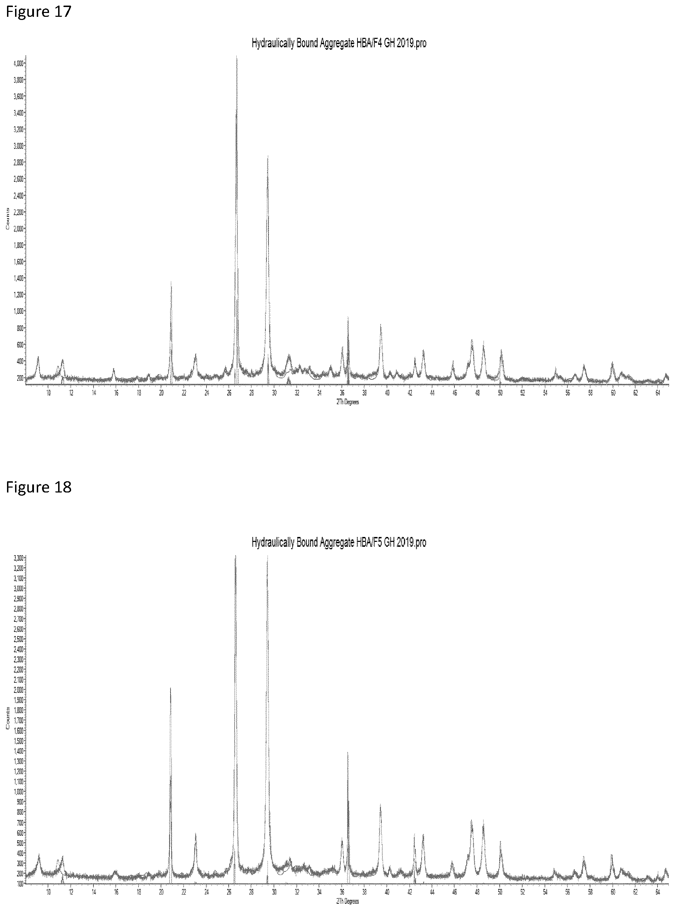

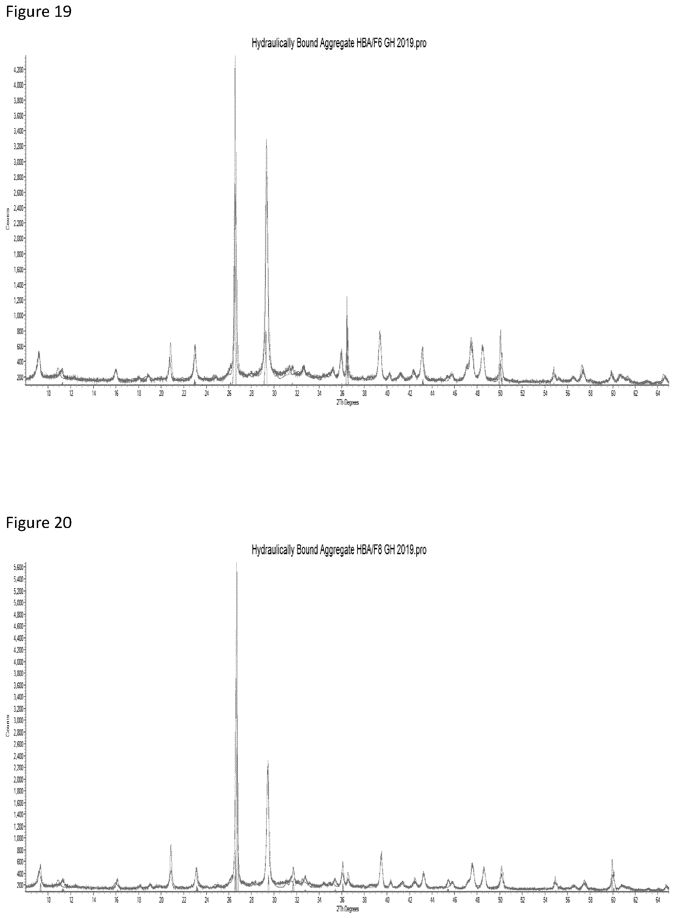

Information obtained from the XRD scans in Figures 1 to 20 is shown in Tables 16 - 18.

A document published by the World Health Organisation (WHO) document: European Commission Regulation (EU) No 277/2012, specifies the maximum levels and action thresholds for dioxins and polychlorinated biphenyls (PCBs). The mammals WHO TCDD toxic equivalent (TEQ) results presented in EU Regulation No 277/2012 can be compared with the results in Table 1, for the Hydraulically Bound Aggregate containing PSA. As shown in Table 1, the figures for the hydraulically bound aggregate produced in the present invention are lower (2.67 (Mix 1) & 2.53 (Mix 5)) than that quoted for fish oil (4.0) in the EU Regulation, with regards to dioxins and polychlorinated biphenyls.

Table 1 is a table showing the levels of dioxins and PCB (ng/kg) present in several different raw materials which can be used in the production of hydraulic bound aggregate, and the hydraulic bound aggregate produced according to the present invention. As described above, paper sludge ash (PSA) is a specific form of air pollution control residue, produced as a by-product in the paper recycling industry.

**Table 1**

| Incoming Raw Materials | Quarry fines | Quarry fines PSA 1 Blend | Hassock PSA 2 Blend | PSA 1 | PSA 2 | APCr 1 | APCr 2 | APCr 3 |
|---|---|---|---|---|---|---|---|---|
| Pre-assessment of Dioxin & PCB ng/kg | | | | | | | | |
| Dioxins | | | | | | | | |
| I-TEQ | 1.3 | 1.65 | 2.86 | 1.89 | 29.4 | 231 | 155 | 623 |
| Mammals | 1.56 | 1.81 | 3.03 | 2.1 | 26.4 | 205 | 136 | 606 |
| Fish | 1.7 | 1.95 | 3.01 | 2.29 | 30 | 224 | 143 | 661 |
| Birds | 1.96 | 2.6 | 9.45 | 2.94 | 87.9 | 358 | 381 | 1310 |

| **PCB** | | | | | | | | |
|---|---|---|---|---|---|---|---|---|
| Mammals | 0.0234 | 0.0491 | 0.0225 | 0.0259 | 0.37 | 4.87 | 4.23 | 9.65 |
| Fish | 0.00118 | 0.00246 | 0.00112 | 0.00124 | 0.0181 | 0.219 | 0.195 | 0.447 |
| Birds | 0.0463 | 0.0803 | 0.107 | 0.0698 | 0.0891 | 6.93 | 6.7 | 16.8 |
| Hydraulically Bound Aggregate Formula | HBA/F4 | HBA/F10 | HBA/F9 | HBA/F11 | HBA/F5 | HBA/F7 | HBA/F8 | HBA/F13 |
| Pre-assessment of Dioxin & PCB ng/kg | Mix 1 | Mix 2 | Mix 3 | Mix 4 | Mix 5 | Mix 6 | Mix 7 | Mix 8 |
| | PSA 2 | PSA 2 / APCr 1 | PSA 2 / APCr 2 | PSA 2 / APCr 3 | PSA 1 | PSA 1 / APCr 1 | PSA 1 / APCr 2 | PSA 1 / APCr 3 |

| **Dioxins** | | | | | | | | |
|---|---|---|---|---|---|---|---|---|
| I-TEQ | 2.67 | 34.7 | 9.46 | 63.9 | 2.53 | 36 | 15.4 | 66.6 |
| Mammals | 2.84 | 31.6 | 9.37 | 61 | 3.09 | 33.9 | 14.3 | 58.4 |
| Fish | 3.17 | 32.4 | 9.8 | 68.3 | 3.46 | 33.1 | 13.7 | 65.9 |
| Birds | 5.1 | 57.6 | 26.4 | 137 | 4.09 | 49.6 | 35.3 | 139 |
| **PCB** | | | | | | | | |
| Mammals | 0.0619 | 0.572 | 0.373 | 1.11 | 0.0497 | 0.608 | 0.582 | 1.08 |
| Fish | 0.00515 | 0.0256 | 0.018 | 0.0513 | 0.00309 | 0.0283 | 0.0277 | 0.0503 |
| Birds | 0.892 | 1.07 | 0.846 | 2.05 | 0.359 | 1.44 | 1.12 | 2.05 |

The mixes mentioned in the tables and herein refer to mixtures used in the methods of the invention. Each mix uses similar starting materials but these starting materials have been obtained from different sources and therefore vary in their precise composition. As shown in Table 1, Mix 1 comprises PSA 2; Mix 2 comprises PSA 2/APCr 1; Mix 3 comprises PSA 2/APCr 2; Mix 4 comprises PSA 2/APCr 3; Mix 5 comprises PSA 1; Mix 6 comprises PSA 1/APCr 1; Mix 7 comprises PSA 1/APCr 2; and Mix 8 comprises PSA 1/APCr 3. Where used, the amount of PSA was 10% and the amount of APCr was 30%. The hydraulic bound aggregate formula (HBA/F) in the tables refers to the hydraulic bound aggregate formed from the mixes. For example, 10% PSA is mixed with quarry fines and cured, thereby forming aggregate (which is recovered) and a blend of <2mm hydraulic fines containing 85% fines and 15% PSA. The <2mm hydraulic fines then undergo the methods described for forming hydraulically bound aggregate.

Table 2 is a table showing the total dioxins, furans and PCB concentrations (ng/kg) present in several different raw materials which can be used in the production of hydraulic bound aggregate, and the hydraulic bound aggregate produced according to the methods of the invention.

**Table 2**

| | | | | | | | | |
|---|---|---|---|---|---|---|---|---|
| Incoming Raw materials HBA Plant | PSA 1 | PSA 2 | APCr 1 | APCr 2 | APCr 3 | Hassock | Hassock PSA 1 Blend | Hassock PSA 2 Blend |

| **Furans** | | | | | | | | |
|---|---|---|---|---|---|---|---|---|
| Total 2,3,7,8-Furans | 6.98 | 143.87 | 4416.00 | 881.52 | 3769.30 | 0.00 | 21.18 | 12.60 |

| **Dioxins** | | | | | | | | |
|---|---|---|---|---|---|---|---|---|
| Total 2,3,7,8-Dioxins | 9.22 | 138.12 | 4663.82 | 1370.70 | 5061.00 | 0.00 | 12.91 | 15.31 |

| **PCB Concentration** | | | | | | | | |
|---|---|---|---|---|---|---|---|---|
| Total PCB | 8.26 | 25.43 | 258.47 | 211.13 | 490.60 | 4.87 | 2.73 | 4.82 |
| | | | | | | | | |
| Sum of Furan, Dioxins & PCB | 24.46 | 307.42 | 9338.29 | 2463.35 | 9320.90 | 4.87 | 36.82 | 32.73 |
| | | | | | | | | |
| Hydraulically Bound Aggregate | Mix 1 | Mix 2 | Mix 3 | Mix 4 | Mix 5 | Mix 6 | Mix 7 | Mix 8 |

| **Furans** | | | | | | | | |
|---|---|---|---|---|---|---|---|---|
| Total 2,3,7,8-Furans | 2.176 | 752.25 | 63.03 | 414.32 | 3.661 | 949.59 | 146.27 | 434.48 |

| **Dioxins** | | | | | | | | |
|---|---|---|---|---|---|---|---|---|
| Total 2,3,7,8-Dioxins | 9.16 | 821.86 | 104.54 | 563.9 | 12.38 | 1138.48 | 138.99 | 571.47 |

| **PCB Concentration** | | | | | | | | |
|---|---|---|---|---|---|---|---|---|
| Total PCB | 165.23 | 102.65 | 69.18 | 99.14 | 61.63 | 161.66 | 82.97 | 111.72 |
| | | | | | | | | |
| Sum of Furan, Dioxins & PCB | 176.56 | 1676.76 | 236.75 | 1077.36 | 77.67 | 2249.73 | 368.23 | 1117.67 |

In the UK Environment Agency document: Soil Guideline Values for dioxins, furans and dioxin-like PCBs in soil Science Report SC050021 / Dioxins SGV, for gardens and allotments the sum all the furan, dioxin, PCBs for use in soils in the UK is recommended to be <8000ng/kg. As shown in Table 2, all the hydraulic bound aggregates produced according to the present invention are less than 8000 ng/kg, and therefore meet the criteria as laid out in the Soil Guideline Values for dioxins, furans and dioxin-like PCBs.

Table 3 is a table showing the leachate of water soluble metals from 8 different mixes of hydraulic bound aggregate produced according to the methods of the present invention.

**Table 3**

| | **Mix 1** | **Mix 2** | **Mix 3** | **Mix 4** | **Mix 5** | **Mix 6** | **Mix 7** | **Mix 8** |
|---|---|---|---|---|---|---|---|---|
| | **ppm** | **ppm** | **ppm** | **ppm** | **ppm** | **ppm** | **ppm** | **ppm** |
| **Aluminium** | 0.1703 | 0.6514 | 0.0117 3 | 1.684 | 0.1463 | 1.367 | 0.0884 | 1.387 |
| **Arsenic** | 0.0045 | 0.0051 | 0.0043 | 0.0046 | 0.0022 | 0.0004 | 0.0008 | 0.0052 |
| **Barium** | 0.9769 | 0.0600 | 2.0120 | 0.2813 | 4.9710 | 0.4225 | 0.3172 | 0.4581 |
| **Cadmium** | 0.0000 | 0.0001 | 0.0000 | 0.0009 | 0.0000 | 0.0004 | 0.0000 | 0.0181 |
| **Cobalt** | 0.0022 | 0.0023 | 0.0013 | 0.0024 | 0.0002 | 0.0021 | 0.0000 | 0.0014 |
| **Chromium** | 0.0204 | 0.0166 | 0.0357 | 0.0286 | 0.0368 | 0.0278 | 0.0000 | 0.0077 |
| **Copper** | 0.0417 | 0.1240 | 0.0255 | 0.1777 | 0.0266 | 0.1793 | 0.0000 | 0.4451 |
| **Iron** | 0.0000 | 0.3821 | 0.0000 | 0.6095 | 0.0000 | 0.4385 | 0.0000 | 0.6371 |
| **Mercury** | 0.0067 | 0.0021 | 0.0000 | 0.009 | 0.0001 | 0.0000 | 0.0000 | 0.0000 |
| **Manganese** | 0.0000 | 0.0153 | 0.0000 | 0.0319 | 0.0000 | 0.0188 | 0.0095 | 0.1300 |
| **Molybdenu m** | 0.0089 | 0.0035 | 0.0148 | 0.0068 | 0.0379 | 0.0079 | 0.0043 | 0.0050 |
| **Nickel** | 0.0005 | 0.0069 | 0.0010 | 0.0083 | 0.0000 | 0.0107 | 0.0018 | 0.0063 |
| **Lead** | 0.0008 | 0.1000 | 0.0000 | 0.1144 | 0.0094 | 0.0479 | 0.0000 | 0.0620 |
| **Antimony** | 0.0000 | 0.0067 | 0.0098 | 0.022 | 0.0093 | 0.0313 | 0.0453 | 0.1088 |
| **Selenium** | 0.0000 | 0.0008 | 0.0000 | 0.0035 | 0.0000 | 0.0016 | 0.0000 | 0.0003 |
| **Vanadium** | 0.0092 | 0.0290 | 0.0000 | 0.0250 | 0.0188 | 0.0280 | 0.0000 | 0.2960 |
| **Zinc** | 0.0000 | 0.0726 | 0.0000 | 0.2666 | 0.0023 | 0.1945 | 0.0443 | 0.5424 |

### Examples

### Example 1. Recovering hydraulic fines material from waste fines material

Pre-treatment of the waste fines material (e.g. quarry waste fines, such as Hassocks fines) is required when the waste fines material is wet, i.e. it has a residual moisture content of greater than 12%. The pre-treatment essentially dries the mixture so that a portion of it can be used in the formation of the hydraulically bound aggregate, while another portion can be considered an end-of-waste material.

Thus, when the waste fines material is wet, the first stage of the process is the pre-treatment of the waste fines material and paper sludge ash. This involves blending the waste fines material and paper sludge ash in a rapid continuous mixer, wherein the waste fines material typically comprises moisture and natural aggregates and the paper sludge ash contains calcium oxide, calcium silicates, calcium chlorides and calcium aluminates.

Upon blending the paper sludge ash with the waste fines material an exothermic reaction occurs. This exothermic reaction occurs between the calcium oxide (present in the paper sludge ash) and the moisture (provided by the waste fines material). Temperatures between the air pollution control residues and moisture may be between 42°C and 80°C and temperatures in the combined powders and waste fines mixture between 18°C and 28°C.

Following the exothermic reaction, there is a slower heat of hydration reaction which occurs between the moisture, calcium oxide, calcium hydroxide and calcium aluminates. The mixture is stored and left to react until a suitably dry mixture is left. Typically the mixture is stored for between 6 to 48 hours. Most preferably it is stored for 24 hours.

This series of reactions acts to reduce the moisture in the waste fines material to achieve a semi-dry form that enables the material to be more easily separated into clay type particles and rock fines.

After the mixture is left to react such that a suitably dry mixture is left, it is put through a separation process to recover the natural aggregate from the finer waste fines material, which would otherwise have been disposed of. For example, the waste fines and paper sludge ash blend is transferred to two consecutive vibrating screens to separate the material into two screen sizes: >2mm (limestone aggregate) and <2mm (hydraulic bound mixture). The outputs from the screening operation are then conveyed to storage locations through covered conveyors. The larger sized material will often be classified as an end-of-waste material, greatly adding to the value of this product.

Air pollution control residues, paper sludge ash and Portland cement are stored in dedicated silios and are maintained in enclosed systems until they are to be mixed.

### Example 2. Exothermic reactions

Several tests were carried out to identify and measure the exothermic reactions between different air pollution control residues with water and with sodium silicate. The results are shown in Tables 4 to 11.

Table 4 shows the examination of the exothermic reaction progress of formula PSA 1 by adding water.

**Table 4**

| | | | | | | | |
|---|---|---|---|---|---|---|---|
| **Mixer** | R01 | | Inclination | | 30° | **Rotor** | Star-type rotor |
| **Material infeed** | 2 kg PSA 1 | | | | | | |
| **Other** | - | | | | | | |

| **Time [min]** | **Indiv.** Step [min] | **Speed** | | **Mixing** Principle **CCM CM¹** | **Process** step | **Remark** | |
|---|---|---|---|---|---|---|---|
| | | **Rotor [m/s]** | **Pan [m/s]** | | | | |
| 1 | 1,00 | 7.3 | 0.5 | CCM | Addition of liquid | Addition of 0.25 kg water | |
| 6 | 5,00 | 1.7 | | | Mixing | T_{1.5min} = 80.0 °C | |
| | | | | | | T₂ₘᵢₙ = 79.0 °C | |
| | | | | | | T_{2.5min} = 78.0 °C | |
| | | | | | | T₃ₘᵢₙ = 75.5 °C | |
| | | | | | | T₄ₘᵢₙ = 73.5 °C | |
| | | | | | | T₅ₘᵢₙ = 71.0 °C | |

Table 5 shows the examination of the exothermic reaction progress of formula PSA 1 by adding sodium silicate solution.

**Table 5**

| | | | | | | | |
|---|---|---|---|---|---|---|---|
| **Mixer** | R01 | | Inclination | | 30° | **Rotor** | Star-type rotor |
| **Material infeed** | 2 kg PSA 1 | | | | | | |
| **Other** | Sodium silicate solution | | | | | | |

| **Time** [min] | **Indiv.** Step [min] | **Speed** | | **Mixing Principle CCM CM¹** | **Process step** | **Remark** | |
|---|---|---|---|---|---|---|---|
| | | **Rotor [m/s]** | **Pan [m/s]** | | | | |
| 1 | 1,00 | 7.3 | 0.5 | CCM | Addition of liquid | Addition of 0.25 kg solution | |
| 6 | 5,00 | 1.7 | | | Mixing | T_{0.5min} = 42.0 °C | |
| | | | | | | T₁ₘᵢₙ = 53.0 °C | |
| | | | | | | T_{1.5min} = 63.0 °C | |
| | | | | | | T₂ₘᵢₙ = 67.0 °C | |
| | | | | | | T_{2.5min} = 67.0 °C | |
| | | | | | | T₃ₘᵢₙ = 66.5°C | |
| | | | | | | T_{3.5min} = 65.0 °C | |

As shown in the tables, the only variable between the experiments was the addition of sodium silicate solution rather than water. All other reaction conditions were kept constant.

As shown in Table 4, when PSA 1 was mixed with 0.25 kg of water the temperature after 1.5 minutes (T_{1.5min}) was 80°C, after 3.5 minutes the temperature was between 75.5°C and 73.5°C. The temperature of the mixture fell from 80°C at 1.5 minutes to 71°C after 5 minutes.
When PSA 1 was mixed with 0.25 kg of sodium silicate solution the temperature after 1.5 minutes was 63°C, after 3.5 minutes this had increased to 65°C. Thus, the temperature of the mixture increased over time upon the addition of sodium silicate solution. At 30 seconds the temperature of the mixture was 42°C, thus the temperature of the mixture increased by over 20°C (23°C, precisely) over a 3 minute period.

Table 6 shows the examination of the exothermic reaction progress of formula PSA 2 by adding water.

**Table 6**

| **Mixer** | R01 | | **Inclination** | | 30° | **Rotor** | Star-type rotor |
|---|---|---|---|---|---|---|---|
| **Material infeed** | 2 kg PSA 2 | | | | | | |
| **Other** | - | | | | | | |
| **Time [min]** | **Indiv. Step [min]** | **Speed** | | **Mixing Principle CCM CM¹** | **Process step** | **Remark** | |
| | | **Rotor [m/s]** | **Pan [m/s]** | | | | |
| 1 | 1,00 | 7.3 | 0.5 | CCM | Addition of liquid | Addition of 0.25 kg water | |
| 6 | 5,00 | 1.7 | | | Mixing | T_{2.5min} = 42.5 °C | |
| | | | | | | T₃ₘᵢₙ = 47.0 °C | |
| | | | | | | T₄ₘᵢₙ = 52.5 °C | |
| | | | | | | T₅ₘᵢₙ = 55.0 °C | |
| | | | | | | T₆ₘᵢₙ = 55.0 °C | |

Table 7 shows the examination of the exothermic reaction progress of formula PSA 2 by adding sodium silicate solution.

**Table 7**

| **Mixer** | R01 | | **Inclination** | | 30° | **Rotor** | Star-type rotor |
|---|---|---|---|---|---|---|---|
| **Material infeed** | 2 kg PSA 2 | | | | | | |
| **Other** | Sodium silicate solution | | | | | | |
| **Time [min]** | **Indiv. Step [min]** | **Speed** | | **Mixing Principle CCM CM¹** | **Process step** | **Remark** | |
| | | **Rotor [m/s]** | **Pan [m/s]** | | | | |
| 1 | 1,00 | 7.3 | 0.5 | CCM | Addition of liquid | Addition of 0.25 kg solution | |
| 6 | 5,00 | 1.7 | | | Mixing | T_{0.5min} = 29.5 °C | |
| | | | | | | T₁ₘᵢₙ = 31.0 °C | |
| | | | | | | T_{1.5min} = 31.0 °C | |
| | | | | | | T₂ₘᵢₙ = 31.5 °C | |
| | | | | | | T_{2.5min} = 32.0 °C | |

Table 8 shows the examination of the exothermic reaction progress of formula APCr 2 by adding water.

**Table 8**

| **Mixer** | R01 | | **Inclination** | | 30° | **Rotor** | Star-type rotor |
|---|---|---|---|---|---|---|---|
| **Material infeed** | 2 kg APCr 2 | | | | | | |
| **Other** | - | | | | | | |
| **Time [min]** | **Indiv. Step [min]** | **Speed** | | **Mixing Principle CCM CM¹** | **Process step** | **Remark** | |
| | | **Rotor [m/s]** | **Pan [m/s]** | | | | |
| 1 | 1,00 | 7.3 | 0.5 | CCM | Addition of liquid | Addition of 0.25 kg water | |
| 6 | 5,00 | 1.7 | | | Mixing | T₁ₘᵢₙ = 58.0 °C | |
| | | | | | | T_{1.5min} = 58.0 °C | |
| | | | | | | T₂ₘᵢₙ = 57.5 °C | |
| | | | | | | T₃ₘᵢₙ = 56.0 °C | |

Table 9 shows the examination of the exothermic reaction progress of formula APCr 2 by adding sodium silicate solution.

**Table 9**

| **Mixer** | R01 | **Inclination** | | 30° | **Rotor** | Star-type rotor |
|---|---|---|---|---|---|---|
| **Material infeed** | 2 kg APCr 2 | | | | | |
| **Other** | Sodium silicate solution | | | | | |
| **Time [min]** | **Indiv. Step [min]** | **Speed** | | **Mixing Principle CCM CM¹** | **Process step** | **Remark** |
| | | **Rotor [m/s]** | **Pan [m/s]** | | | |
| 1 | 1,00 | 7.3 | 0.5 | CCM | Addition of liquid | Addition of 0.25 kg solution |
| 6 | 5,00 | 1.7 | | | Mixing | T_{0.5min} = 49.0 °C |
| | | | | | | T₁ₘᵢₙ = 55.5 °C |
| | | | | | | T_{1.5min} = 57.0 °C |
| | | | | | | T₂ₘᵢₙ = 57.0 °C |
| | | | | | | T_{2.5min} = 56.5 °C |
| | | | | | | T₃ₘᵢₙ = 56.0 °C |

Table 10 shows the examination of the exothermic reaction progress of formula APCr 10 by adding water.

**Table 10**

| **Mixer** | R01 | | **Inclination** | | 30° | **Rotor** | Star-type rotor |
|---|---|---|---|---|---|---|---|
| **Material infeed** | 2 kg APCr 10 | | | | | | |
| **Other** | - | | | | | | |
| **Time [min]** | **Indiv. Step [min]** | **Speed** | | **Mixing Principle CCM CM¹** | **Process** step | **Remark** | |
| | | **Rotor [m/s]** | **Pan [m/s]** | | | | |
| 1 | 1,00 | 7.3 | 0.5 | CCM | Addition of liquid | Addition of 0.25 kg water | |
| 6 | 5,00 | 1.7 | | | Mixing | T₁ₘᵢₙ = 60.0 °C | |
| | | | | | | T₂ₘᵢₙ = 59.5 °C | |
| | | | | | | T_{2.5min} = 59.0 °C | |
| | | | | | | T_{3.5min} = 58.5 °C | |

Table 11 shows the examination of the exothermic reaction progress of formula APCr 10 by adding sodium silicate solution.

**Table 11**

| **Mixer** | R01 | | **Inclination** | | 30° | **Rotor** | Star-type rotor |
|---|---|---|---|---|---|---|---|
| **Material infeed** | 2 kg APCr 10 | | | | | | |
| **Other** | Sodium silicate solution | | | | | | |
| **Time [min]** | **Indiv. Step [min]** | **Speed** | | **Mixing Principle CCM CM¹** | **Process step** | **Remark** | |
| | | **Rotor [m/s]** | **Pan [m/s]** | | | | |
| 1 | 1,00 | 7.3 | 0.5 | CCM | Addition of liquid | Addition of 0.25 kg solution T_{1.5min} = T₂ₘᵢₙ = T_{2.5min} = T₃ₘᵢₙ = | |
| 6 55.0 °C 53.5 °C 53.5 °C 53.0 °C | 5,00 | 1.7 | | | Mixing | T₁ₘᵢₙ = | 55.0 °C |
| | | | | | | | |
| | | | | | | | |
| | | | | | | | |
| | | | | | | | |

Tests were also carried out to identify the exothermic reaction of natural quarry fines containing an average of 15% moisture (Tables 12 and 13).

Table 12, shows the examination of the exothermic reaction of natural quarry fines containing an average of 15% moisture with 10% PSA 1 with no added water.

**Table 12**

| **Mixer** | R15 | **Inclination** | 30° | **Rotor** | Star-type rotor |
|---|---|---|---|---|---|
| **Material infeed** | 250 kg Hassock fines | | | | |
| **Other** | PSA 1 | | | | |
| **Mix Number** | Temperature at Start | | Temperature after Mixing | | Temperature after 24 hours |
| **Mix 1** | 10° c | | 20° c | | 16° c |
| **Mix 2** | 10° c | | 20° c | | 16° c |

Table 13, shows the examination of the exothermic reaction of natural quarry fines containing an average of 15% moisture with 10% PSA 2 with no added water.

**Table 13**

| **Mixer** | R15 | **Inclination** | 30° | **Rotor** | Star-type rotor |
|---|---|---|---|---|---|
| **Material infeed** | 250 kg Hassock fines | | | | |
| **Other** | PSA 2 | | | | |
| **Mix Number** | Temperature at Start | | Temperature after Mixing | | Temperature after 24 hours |
| **Mix 1** | 9° c | | 22° c | | 16° c |
| **Mix 2** | 9° c | | 22° c | | 16° c |
| **Mix 3** | 10° c | | 27° c | | 19° c |
| **Mix 4** | 9° c | | 27° c | | 19° c |

Table 14 shows a list of the technical performance of different formulations of hydraulic bound aggregate.

**Table 14**

| Aggregate Characteristics of a Range of PSA and APCr Combinations using Hydraulically Bound Aggregate | | | | | | |
|---|---|---|---|---|---|---|
| PSA/APCr Addition | | | 10% | 25% | 35% | 20% |
| | | | HBA/F5 | HBA/F7 | HBA/F7 | HBA/F12 |
| | | | | APCr 1 | APCr 1 | APCr 3 |
| Particle size mm | 10 - 4 mm | | 28 Day Cured | 28 Day Cured | 28 Day Cured | 28 Day Cured |
| Dry loose bulk density mean | EN 1097 | Mg/m3 | 1.05 | 1.03 | 1.08 | 1.02 |
| Dry loose bulk density air voids | EN 1097 | % | 43 | 42 | 38 | 44 |
| Dry compacted bulk density mean | EN 1097 | Mg/m3 | 1.12 | 1.09 | 1.15 | 1.09 |
| Dry compacted bulk density air voids | EN 1097 | % | 40 | 39 | 34 | 40 |
| Particle density oven dried basis | EN 1097 | Mg/m3 | 1.84 | 1.77 | 1.75 | 1.83 |
| Particle density saturated and surface dried basis | EN 1097 | Mg/m3 | 2.14 | 2.05 | 2.06 | 2.14 |
| Apparent particle density | EN 1097 | Mg/m3 | 2.28 | 2.48 | 2.53 | 2.64 |
| Water Absorption | EN 1097 | % | 10.4 | 16.3 | 17.7 | 16.7 |
| Crushing Resistance | EN 13055 | N/mm2 | 10.2 | 10.2 | 7.3 | 9.4 |
| Minimum Value | EN 13055 | N/mm2 | 10.1 | 10.1 | 7 | 9.3 |
| | | | | | | |
| Resistance to Attrition (Los Angeles) | EN 1097 | % | 29 | 30 | 30 | 63 |
| Magnesium Sulphate Value (MS) | EN 1367 | % | 3 | 1 | 1 | 6 |
| Drying Shrinkage | EN 1367 | % | 0.089 | 0.14 | 0.128 | 0.083 |
| Water Soluble Chloride | EN 1744 | % | 0.007 | 0.716 | 0.181 | 0.141 |
| Acid Soluble Chloride | EN 1744 | % | 0.34 | 0.83 | 4.46 | 0.46 |
| Water Soluble Sulphate | EN 1744 | % | 0.01 | <0.01 | 0.01 | <0.01 |
| Total Sulfur as S | EN 1744 | % | 0.3 | 0.5 | 0.6 | 0.3 |
| Water soluble Sulphate (as SO3) | EN 1744 | % | 0.01 | <0.01 | 0.01 | <0.01 |
| Water soluble Sulphate (as SO4) | EN 1744 | % | 0.02 | <0.01 | 0.01 | <0.01 |
| Acid Soluble Sulphate | EN 1744 | % | 0.8 | 1.3 | 1.3 | 0.8 |
| Ten Percent Fines Value of Aggregate | BS 812 | kN | 35 | 30 | 100 | 40 |

In each mix 10% PSA 1 was used. For example, in the first row (HBA/F5) 10% PSA 1 was used and no APCr, in the second row (HBA/F7) 10% PSA 1 was used with 15% APCr 1. As indicated, industry known standard test procedures were used. EN 1097 tests for mechanical and physical properties of aggregates. EN 13055 specifies the properties of Lightweight Aggregates (LWA) and fillers derived thereof obtained by processing natural or manufactured materials and mixtures of these aggregates for concrete, mortar and grout, bituminous mixtures and surface treatments and for unbound and hydraulically bound applications in construction works. EN 1367 tests for thermal and weathering properties of aggregates. EN 1744 tests for chemical properties of aggregates. BS 812 part 111 describes methods for the determination of the ten per cent fines value (TFV) of aggregates which give a relative measure of the resistance of an aggregate to crushing under a gradually applied compressive load.

Table 15 shows the results of the effect of rinsing the hydraulic bound aggregate between 12 to 48 hours after manufacture on the amounts of soluble chlorides present in the aggregate.

**Table 15**

| | | Granular | Pellet | Granular | Pellet | Granular | Pellet | Pellet | Pellet |
|---|---|---|---|---|---|---|---|---|---|
| | | | | | | | | | |
| | | HBA/F5 30% APCr | HBA/F5 10% APCr | HBA/F7 10% APCr | HBA/F7 10% APCr | HBA/F7 30% APCr | HBA/F7 30% APCr | HBA/F8 10% APCr | HBA/F8 30% APCr |
| | | 28 Day Cured | 28 Day Cured | 28 Day Cured | 28 Day Cured | 28 Day Cured | 28 Day Cured | 28 Day Cured | 28 Day Cured |

| Naturally Cured | | | | | | | | | |
|---|---|---|---|---|---|---|---|---|---|
| Water Soluble Chloride EN 1744 | % | 0.220 | 0.053 | 0.702 | 0.241 | 1.663 | 0.411 | 0.482 | 2.553 |
| Acid Soluble Chloride EN 1744 | % | 0.660 | 0.320 | 1.380 | 1.410 | 3.050 | 3.040 | 2.450 | 5.660 |

| Wash Plant Samples Washed between 12 and 48 Hours | | | | | | | | | |
|---|---|---|---|---|---|---|---|---|---|
| Water Soluble Chloride EN 1744 | % | 0.02 | 0.009 | 0.092 | 0.099 | 0.092 | 0.232 | 0.135 | 0.239 |
| Acid Soluble Chloride EN 1744 | % | 0.25 | 0.23 | 1.02 | 0.97 | 1.02 | 2.65 | 1.58 | 2.46 |

In Table 15, granular refers to sizes between 0-4mm and pellets refer to sizes between 4-10mm. Percentages are by weight. In each of the mixes 10% PSA was used in combination with the percentage of APCr specified. 10% cement was then added and the remaining weight made up using <2mm hydraulic fines. Industry known standards test procedures EN 1744 were used, as described above.

As shown in Table 15, the amount of water soluble chlorides and acid soluble chlorides in the aggregates varied. This is in line with the fact that the exact composition of the resulting hydraulic bound aggregate will vary depending on the starting materials used. For example, HBA/F5 had the lowest percentage of water soluble and acid soluble chlorides, while HBA/F8-30 had the highest percentage of water soluble and acid soluble chlorides, prior to rinsing. Table 15 shows that rinsing the aggregate in a wash plant between 12 and 48 hours after manufacture of the aggregate, reduced the amount of water soluble chlorides and acid soluble chlorides present in the aggregate.

### Example 3. Formation of cementitious compounds between air pollution control residues and sodium silicate solution

As described, the different types of air pollution control residues will vary depending on the way in which they have been produced, i.e. the nature of the material burned. Due to these differences, the reactions with different residues and the sodium silicate solution will vary between paper sludge ash and cement kiln dust, for example.

For example, as shown in Table 16 in PSA 1 there are significant changes in the phases to tricalcium silicate, dicalcium silicate, lime, calcium magnesium silicate (Akermanite) and calcium aluminate silicates (Gehlenite). There also significant reductions in all three chloride phases.

These phase changes can also be seen in PSA 2. However, in PSA 2 there is a higher percentage of dicalcium silicate present compared to PSA 1, which is highly beneficial to the process. The higher percentage of dicalcium silicate present in the mixture reduces the amount of Portland cement (or other suitable sulphate containing material) required for the hardening of the hydraulically bound aggregate. With the combination of PSA with APCr 2 and 10 the greatest changes are to the tricalcium silicate and the calcium carbonate phases, with reduction in all three chloride phases, it is possible if the right environment is created to convert all chlorides to sodium chloride.

When the powders are combined in pre-determined proportions, based on the analysis prior to blending the powders together, it is possible to produce the hydraulic binder for producing the desired hydraulically bound aggregate. Notably, ettringite is not detected in powder form. It is only when the powder is activated with the sodium silicate solution and hydrated for up to 24 hours that the ettringite phase is produced encapsulating the soluble metals in the process.

Tables 16 to 18 show the detailed composition (% by weight) of each of the formulations corresponding to Figures 1 to 20.

**Table 16**

| Raw Materials as Powder and Activated | Figure 1 | Figure 2 | Figure 3 | Figure 4 | Figure 5 | Figure 6 | Figure 7 | Figure 8 |
|---|---|---|---|---|---|---|---|---|
| | PSA 1 Powder | PSA 1 Activat ed | PSA 2 Powder | PSA 2 Activat ed 24 Hr | PSA/AP Cr 1 Powder | PSA/APC r 1 Activate d | APCr 1 Powder | APCr 1 Activate d |
| C₃S - Alite | 2.88 | 16.57 | 2.84 | 8.30 | 2.96 | 10.32 | N/D | N/D |
| C₂S - Alpha | 16.56 | 4.13 | 4.89 | 2.20 | 5.00 | 1.05 | 3.04 | 2.36 |
| C₂S-Beta (Belite) | 14.06 | 15.77 | 20.75 | 25.14 | 14.68 | 12.11 | 11.93 | 18.97 |
| C₃A - Aluminate cubic | 5.77 | 0.23 | 5.78 | 0.08 | 2.21 | 2.53 | 0.88 | N/D |
| C₃A - Aluminate Orthorho mbic | 2.01 | 0.90 | 1.86 | 0.05 | 2.49 | 1.23 | 0.09 | 3.12 |
| C₄AF Colville | 1.84 | 4.00 | 0.84 | 7.86 | 4.61 | 10.25 | 6.41 | 7.46 |
| Lime | 16.73 | 5.65 | 16.40 | 6.35 | 4.27 | 1.68 | 0.67 | 0.19 |
| Calcium hydroxide Portlandit e | 1.16 | 1.95 | N/D | 1.51 | N/D | 1.57 | N/D | 0.03 |
| Calcium Carbonate - Calcite | 14.63 | 8.75 | 7.97 | 10.48 | 14.01 | 12.78 | 11.68 | 12.87 |
| Ettringite | 0.41 | 0.55 | 0.26 | 0.41 | 1.16 | 7.56 | 0.62 | 5.89 |
| Quartz | 4.36 | 1.28 | 25.06 | 8.36 | 2.50 | 4.13 | 17.29 | 8.57 |
| Calcium Sulfate - Anhydrite | 2.84 | 1.92 | 0.19 | 1.63 | 6.09 | 6.27 | 7.53 | 3.58 |
| Calcium Sulfate Dihydrate - Gypsum | 0.09 | 0.67 | 0.08 | 0.98 | 0.44 | 0.01 | 0.24 | 0.69 |
| Arcanite | N/D | N/D | N/D | N/D | N/D | N/D | N/D | N/D |
| Calcium Chloride | 0.48 | 2.63 | 0.41 | 3.15 | 11.46 | 3.43 | 4.74 | 3.91 |
| Halite | 0.43 | 2.01 | N/D | 1.43 | 6.14 | 1.26 | 5.76 | 0.98 |
| Sylvite | 1.00 | 0.43 | 0.56 | 0.64 | 3.50 | 1.57 | 2.81 | 1.86 |
| Akermanit e | 4.29 | 6.74 | 2.52 | 8.62 | 11.07 | 8.89 | 15.46 | 24.10 |
| Gehlenite | 7.68 | 10.15 | 7.41 | 7.07 | 5.96 | 8.05 | 6.22 | 5.06 |
| Mayenite | 2.33 | 3.56 | 2.00 | 2.57 | 0.50 | 2.05 | 1.93 | 0.02 |
| Merwinite | 0.45 | 12.09 | 0.18 | 1.23 | 0.93 | 3.27 | 2.68 | 0.33 |
| | N/D: Not Detected | | | | | | | |

**Table 17**

| Raw Materials as Powder and Activated | Figure 9 | Figure 10 | Figure 11 | Figure 12 | Figure 13 | Figure 14 |
|---|---|---|---|---|---|---|
| | APCr 2 Powder | APCr 2 Activated | HRB Powder | HRB Activated | PC Powder | PC Hydrated |
| C3S - Alite | N/D | N/D | 33.06 | 30.38 | 59.06 | 45.35 |
| C2S - Alpha | 0.80 | 0.64 | 2.12 | 1.51 | 1.05 | 2.11 |
| C2S - Beta (Belite) | 8.13 | 10.66 | 18.47 | 17.14 | 15.84 | 10.43 |
| C3A - Aluminate cubic | N/D | N/D | 4.60 | 2.51 | 4.05 | 2.29 |
| C3A - Aluminate Orthorhombic | 1.20 | 1.43 | 1.56 | 1.27 | N/D | N/D |
| C4AF Colville | 4.55 | 8.76 | 10.09 | 11.73 | 12.26 | 13.08 |
| Lime | 0.02 | 0.33 | 5.25 | 3.13 | 0.30 | 0.34 |
| Calcium hydroxide - Portlandite | 0.04 | 0.07 | N/D | N/D | 0.52 | 0.98 |
| Calcium Carbonate - Calcite | 38.68 | 26.48 | 9.45 | 11.41 | 5.04 | 7.91 |
| Ettringite | 0.34 | 1.32 | 0.42 | 2.43 | 0.56 | 11.99 |
| Quartz | 1.36 | 1.93 | 1.47 | 2.24 | N/D | N/D |
| Calcium Sulfate - Anhydrite | 6.96 | 0.05 | 1.80 | 1.89 | 0.61 | 1.00 |
| Calcium Sulfate Dihydrate - Gypsum | 0.18 | 3.34 | 0.84 | 0.16 | 0.13 | 0.32 |
| Arcanite | N/D | N/D | N/D | N/D | 0.57 | 4.20 |
| Calcium Chloride | 18.10 | 3.65 | 1.21 | 1.73 | N/D | N/D |
| Halite | 10.73 | 23.47 | N/D | 0.98 | N/D | N/D |
| Sylvite | 4.40 | 1.96 | 1.14 | 1.07 | N/D | N/D |
| Akermanite | 3.65 | 11.69 | 4.82 | 5.40 | N/D | N/D |
| Gehlenite | 0.75 | 3.53 | 2.08 | 3.12 | N/D | N/D |
| Mayenite | N/D | 0.01 | 1.58 | 1.22 | N/D | N/D |
| Merwinite | 13.00 | 0.67 | 0.05 | 0.67 | N/D | N/D |
| | N/D: Not Detected | | | | | |

**Table 18**

| Hydraulically Bound Aggregate | Figure 15 | Figure 16 | Figure 17 | Figure 18 | Figure 19 | Figure 20 |
|---|---|---|---|---|---|---|
| | HBA/F1 (No APCr) | HBA/F3 (20% APCr 1) | HBA/F4 (30% APCr 1) | HBA/F5 (20% APCr 2) | HBA/F6 (30% APCr 2) | HBA/F8 (20% APCr 4) |
| Quartz | 29.49 | 29.09 | 30.71 | 29.02 | 23.49 | 35.24 |
| Calcium Carbonate - Calcite | 40.46 | 39.99 | 38.9 | 42.43 | 44.2 | 33.93 |
| Glauconite | 7.55 | 7.78 | 5.85 | 6.28 | 6.84 | 5.99 |
| Muscovite | 4.72 | 4.87 | 4.93 | 5.65 | 3.87 | 3.27 |
| Larnite | 9.38 | 9.09 | 9.68 | 7.64 | 8.93 | 11.48 |
| Ettringite | 3.14 | 3.31 | 6.52 | 3.78 | 9.04 | 7.03 |
| Hemicarboaluminate | 5.26 | 5.87 | 3.41 | 5.21 | 3.64 | 3.06 |

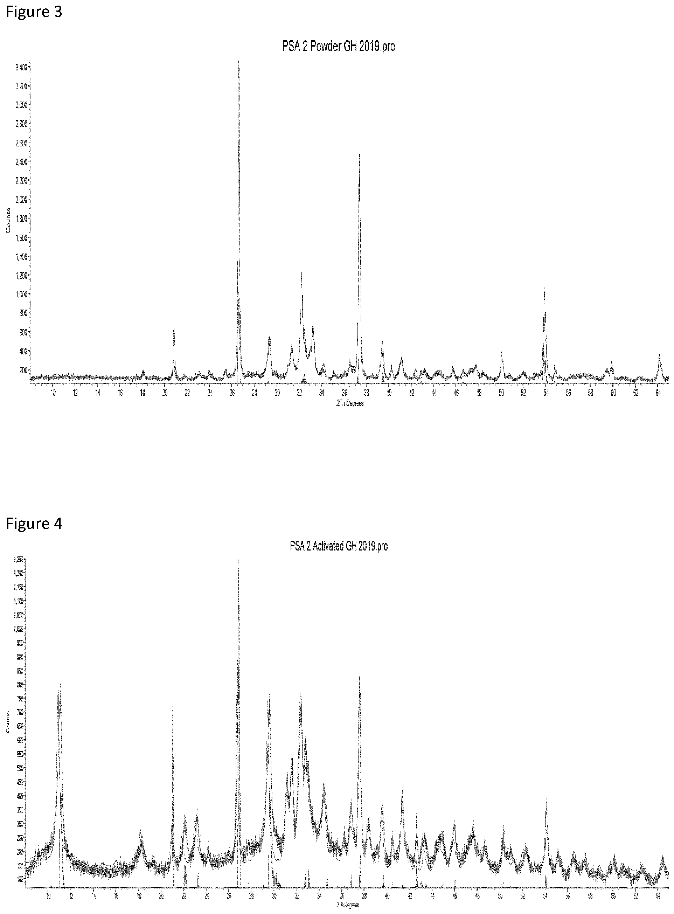

Tables 16 - 18 show the composition change that occurs with the invention which will be readily apparent to the skilled person reviewing the composition tables. For example, Table 16 shows the composition of the powder and activated materials in Figures 1 to 8. Figures 3 and 4 presented in Table 16, show that the amount of C₃S increases from 2.84% to 8.3%, the C₂Sb increases from 20.75% to 25.14% with the corresponding reduction in the amount of C₂Sa from 4.89% to 2.2% and the lime from 16.4% to 6.35% on forming the mixtures of the invention.

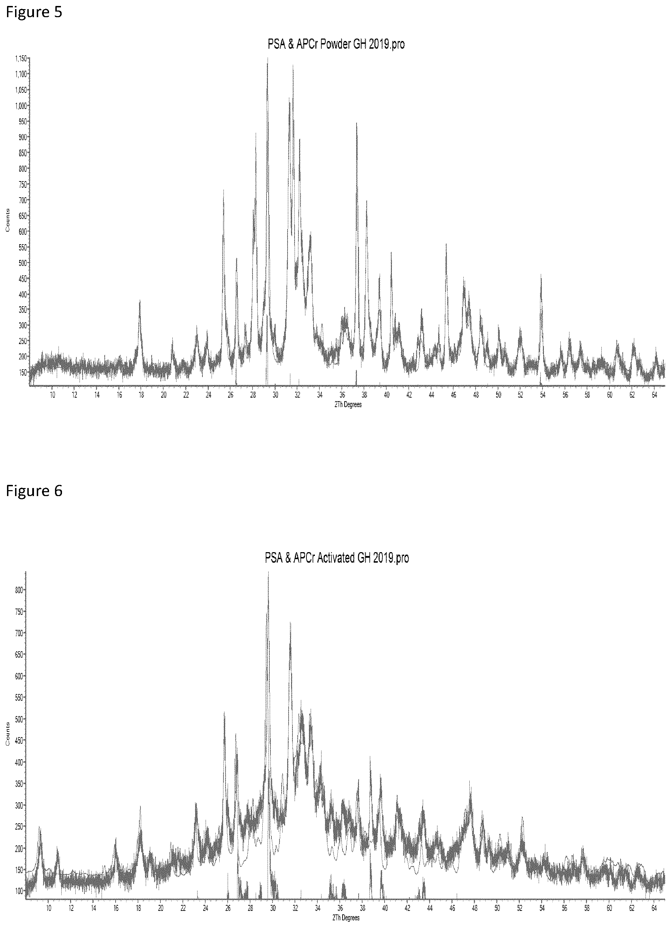

As shown in Tables 16 - 18, the amount of compounds which are capable of encapsulating heavy metals increases when the compositions are activated with sodium silicate solution. For example, PSA/APCr powder comprises 1.16% of ettringite in its powder form (Figure 5) and 7.56% of ettringite in its activated form (Figure 6). In this way, the methods of the invention produce hydraulically bound aggregate having an improved ability to encapsulate heavy metals.

All components shown as % are % by weight unless otherwise stated.

## Claims

1. A method for manufacturing hydraulically bound aggregate, the method comprising:
i) mixing hydraulic fines material with air pollution control residues and sodium silicate to thereby form a first mixture;
ii) adding a sulphate containing material to the first mixture to form a second mixture, wherein the second mixture comprises compounds which encapsulate heavy metals in the air pollution control residues; and
iii) transferring the second mixture to a granulation process, thereby forming hydraulic bound aggregate particles.

2. The method according to claim 1, wherein:
a) the compounds which encapsulate heavy metals in the air pollution control residues comprise ettringite, hemi carbonate and/or hydro carbonate;and/or
b) the compounds which encapsulate heavy metals reduce leaching of heavy metals from the hydraulic bound aggregate.

3. The method according to any preceding claim, wherein the air pollution control residues are paper sludge ash (PSA), cement kiln dust (CKD) and/or by-pass dust (BPD).

4. The method according to any preceding claim, wherein:
a) the first mixture comprises cementitious compounds; and optionally wherein the cementitious compounds comprise calcium alumina silicates, calcium silicates and calcium magnesium silicates; and/or
b) the sulphate containing material is Portland cement; and/or
c) the sulphate containing material is a hardening agent.

5. The method according to any preceding claim, wherein:
a) the sodium silicate is a solution having a viscosity of between about 20 cP and 1200 cP at 20°C; and optionally wherein the sodium silicate solution has a viscosity between about 100 cP to 200 cP at 20°C; and/or
b) the sodium silicate is a solution having a silicate to sodium ratio of about 2:0 and 3:0.8; and optionally wherein the sodium silicate solution has a silicate to sodium ratio of about 2:0 and 3:2; and/or
c) the method further comprising the step of:
first combining the sodium silicate with water prior to the mixing step; and optionally wherein either the water acts as a carrier for the sodium silicate, and/or the first combining step occurs immediately before the mixing step; and/or
d) the sodium silicate viscosity and/or ratio of constituents is dependent on lime and chloride constituents.

6. The method according to any preceding claim, wherein during the mixing and granulation steps dioxins, furans and PCB's in the air pollution control residues bond with clay platelets from the waste fines, fibres from the air pollution control residues and/or the hydraulic binder to encapsulate the dioxins, furans and PCBs.

7. The method according to any preceding claim, wherein:
a) the granulation process produces a particle size distribution of less than about 1mm up to about 6 mm in size; and/or
b) the method further comprising adding water to the first mixture and/or to the second mixture; and/or
c) after transferring the second mixture to a granulation process, the method further comprises the step of: transferring the second mixture to a pelletiser; and/or
d) the hydraulic bound aggregate particles have a size distribution between around 4mm to 14 mm; and/or
e) the hydraulic bound aggregate particles have a size distribution of around 4 to 10 mm.

8. The method according to any preceding claim, further comprising the step of:
curing the hydraulic bound aggregate;
and in which case optionally wherein:
a) the step of curing the hydraulic bound aggregate comprises storing the aggregate for around 2 to 24 hours; and/or
b) Portland cement is added during the curing step; and/or
c) the step of curing the hydraulic bound aggregate is carried out until a desired strength of the aggregate is achieved.

9. The method according to any preceding claim, further comprising the step of:
rinsing the hydraulic bound aggregate to remove unwanted compounds from the hydraulic bound aggregate; in which case optionally wherein:
a) the rinsing step is performed around 12 to 48 hours after the granulation step; and/or
b) the rinsing step is performed around 18 to 30 hours after the granulation step; and/or
c) rinsing step is performed in a wash plant; and/or
d) the unwanted compounds comprise chloride salts and/or dicalcium silicates.

10. A method for recovering hydraulic fines material from waste fines material, the method comprising:
(i) combining waste fines material with air pollution control residues, thereby initiating an exothermic reaction in the waste fines material;
(ii) reacting the waste fines material and air pollution control residues for around 12 to 24 hours, thereby forming hydraulic fines material and limestone aggregates; and
(iii) separating the hydraulic fines material from the limestone aggregates.

11. The method according to claim 10, wherein:
a) the hydraulic fines material comprises particles having a size of less than 1 mm and the limestone aggregates comprise particles having a size of greater than 1 mm.; and/or
b) the step of combining the waste fines material and air pollution control residues is carried out in a rapid continuous mixer.

12. The method according to any one of claims 10 or 11, wherein:
a) the air pollution control residues act as a drying agent for the waste fines material, thereby reducing the moisture content of the waste fines material; and/or
b) the combining step comprises adding sodium silicate solution; and/or
c) the exothermic reaction causes a temperature between about 42°C and 80°C.

13. The method according to any one of claims 10 to 12, further comprising the step of:
storing the hydraulic fines material and limestone aggregates prior to the step of separating; and optionally wherein either:
a) the hydraulic fines material and limestone aggregates are stored for about 6 to 48 hours; or
b) the hydraulic fines material and limestone aggregates are stored for about 16 to 24 hours.

14. The method according to any one of claims 10 to 13, wherein the separating process is a size exclusion process.

15. The method according to any one of claims 10 to 14, wherein the method according to any one of claims 32 to 41 precedes the method according to any one of claims 1 to 9.
